# EUROPEAN PATENT APPLICATION

(11) **EP 4 822 460 A1**
(43) Date of publication of application: **14.10.2026**
(21) Application number: 25169218.2
(22) Date of filing: 08.04.2025
(51) Int. Cl.: G05B 19/042

(54) **CONTROL MODULE AND METHOD FOR PRODUCING THE CONTROL MODULE**

(71) Applicant: KB Intellectual Property GmbH & Co. KG, 82049 Pullach (DE)
(72) Inventor: KAUFMANN, Christian, 71701 Schwieberdingen (DE); LAPOS, Mario, 80809 München (DE)

(57) **Abstract**

The present invention relates to a control module (1), comprising:
a control device (20), and
at least two electronic components (30a, 30b, 30c) of the same basic configuration each of which being connected to the control device (20) by a data line (40) for at least transmitting data to the control device, wherein
each of the electronic components (30a, 30b, 30c) has an ID which is unique and independent of the configuration of the control module (1).

## Description

### Control module and method for producing the control module

The present invention relates to a control module, a vehicle comprising such control module, and a method for producing such control module. The present invention further relates to a computer program product and a computer-readable storage medium.

Control modules comprise electronic components connected to a control device to transmit signals representing certain data of the electronic components to the control device and/or to receive command signals or the like from the control device. For such communication, an ID is assigned to each of the electronic components. As electronic components are mass-produced goods, they provide identical IDs in a delivery state. Accordingly, application specific IDs have to be preprogrammed in advance of placing the respective electronic component within the control module, e.g. by soldering, the electronic component on a circuit board of the control module. According to such preprogramming of IDs, the IDs are assigned to the electronic components according to the configuration of the control module. That is, an ID is assigned to an electronic component according to the position or function, respectively, the electronic component is intended to be positioned or to be used for, respectively. For example, if the electronic component is a pressure sensor intended to be placed in a position to measure a pressure of a pressure channel A, an ID representing a pressure sensor for measuring a pressure of a channel A is assigned to each pressure sensor intended to be used accordingly. This assignment procedure provides the drawback of preprogramming and administration efforts and is also prone to failures if, for example, the electronic component is not placed in the intended position.

It is an object of the present invention to improve the handling of electronic components to be placed with a control module.

The object is solved by the subject matter of the independent claims. Further aspects of the present invention are subject to the dependent claims.

According to the present invention, a control module comprises a control device, and at least two electronic components of the same basic configuration each of which being connected to the control device by a data line for at least transmitting data to the control device, wherein each of the electronic components has an ID which is unique and independent of the configuration of the control module for a given application.

The term "basic configuration" relates to the layout and respective functionalities of the electronic components. As previously said, the electronic components may be mass-produced goods which may be provided on one reel or by another storage medium for further processing, e.g. to be picked and placed within the control module. The electronic components may only provide electronic functions but may also comprise additional functionalities such as pneumatic functionalities. Accordingly, the term "electronic component" comprises any component configured to at least transmit data to the control device via the data line in accordance with a respective electronic functionality. The term "data line" is not restricted to a wired connection but may also comprise wireless communication. In a wired configuration, the data line may be a common data line to connect each of the electronic components to the control device. Alternatively, separate data lines may be provided to connect each electronic component individually to the control device. Combinations thereof are also conceivable.

As a basic principle of the present invention, each of the electronic components placed within the control module, e.g. soldered on a circuit board of the control module, is unique but independent of the configuration of the control module. The configuration of the control module for a given application relates to the specific application the control module is intended for. That is, the control module provides a specific layout with respect to the electronic components to be comprised by the control module. However, the IDs assigned to each of the electronic components are independent of such specific layout. In other words, the IDs of the electronic components are not assigned under consideration of the position and/or functionality to be provided by the respective electronic component when assembled to the control module. It is only required that IDs of electronic components of one control module are assigned only once and thus being unique with respect to one control module. In this context, the only dependency between the control module and the electronic components is the ability of the control module to read the IDs of the electronic components. However, this is not to be understood as any dependency on the configuration of the control module for a given application but simply relates to a communication ability irrespective of the concrete given application.

The assignment of the unique IDs may already be carried out during production of the electronic components or at least before storing the electronic components on a storage medium such as a reel. Alternatively, the assignment of the unique IDs may be carried out during or before placing the electronic components within the control module or even after the electronic components are placed on the control module. The assignment of IDs relates to preprogramming the electronic components or to otherwise provide the electronic components with an ID.

The unique assignment may relate to a unique assignment of IDs to each electronic component of at least one stock, e.g. all electronic components stored on one reel or the like. However, it may be sufficient to assign unique IDs to a number of electronic components expected to be sufficient to provide unique IDs for electronic components to be placed within one control module. For example, if the electronic components are indented to be placed within control modules to be equipped with ten of the electronic components, at least ten unique IDs may be assigned to the electronic components to be placed within the control module one after the other. However, to reduce the risk of providing at least two electronic components having the same ID due to, for example, electronic components not being placed in the right order or not placed at all in the event of a failure, the number of unique IDs may be increased under consideration of predetermined security factor. According to the given example and under assumption of expecting 1% failure, at least eleven unique IDs may be assigned to the electronic components to be placed one after the other. Any further increase in the number of unique IDs is also conceivable. In principle, an ID may be provided as a binary code or any other combination of numerical values and/or letters and the like.

In some embodiments, the ID is a random ID.

Accordingly, the unique IDs may be generated and assigned without the need to consider any order of placement of the electronic components within the control module.

In some embodiments, the IDs of the electronic components represent an order of the electronic components being placed within the control module.

For example, equipping control modules with electronic components is carried out in a predetermined order. That is, with respect to the previous example of ten electronic components, the first electronic component is placed in position 1, the subsequent electronic component is placed in position 2, and so on. Accordingly, IDs providing at least one number of an increasing or decreasing numerical value or any other respective ID pattern, such as an alphabetical order or the like, representing an order on the electronic components to be placed within the control module allows to identify the position of a respective electronic component.

In some embodiments, the control device is configured to receive IDs of the electronic components to match the IDs with functions of the respective electronic components according to the configuration of the control module.

In accordance with the previous exemplary embodiment of IDs representing an order of the electronic components being placed within the control module, the control module may be configured to match the electronic component having the ID representing the electronic component being placed within the module first with the function and therefore the position of the first placement of an electronic component in accordance with a predetermined order of placing electronic components. For example, ten electronic components are to be placed within the control module in an order of placing a first electronic component in position A associated with a specific function, a subsequent electronic component in position B associated with another specific function, and so on. The unique IDs are assigned with an increase in at least two numerical values of numbers of the IDs. Accordingly, the control device may receive IDs of each of the electronic components such as xxx-01, xxx-02, xxx-04, xxx-06, xxx-07, xxx-08, xxx-09, xxx-11, xxx-15 and xxx-19. In this example, the control device matches the ID xxx-01 with position A or the specific function, respectively, the ID xxx-02 with position B, the ID xxx-04 with a position C as third position, and so on. As apparent from the exemplary IDs, even if the numerical values are not increasing continuously the control module is still capable of matching the IDs with respective functions or positions, respectively, as the IDs are unique and provided in a pattern allowing to be associated with an order of placement of the electronic components.

Alternatively or in addition, the control module may be operated, e.g. in course of an end-of-line test, to allow the control device to match IDs with respective functions. For example, with respect to IDs being assigned randomly, one electronic component is associated with a first function which is operated in the course of the exemplary end-of-line test. In the final configuration of the control module such electronic component is expected to transmit a signal to the control device in response to operating the first function. Accordingly, the control device is configured to match the ID of the electronic component providing such signal with the first function. The described matching method is not restricted to randomly assigned IDs but may also be applicable to IDs assigned in a given order according to a defined pattern to represent the order of electronic components being placed with the control module.

Specifically, the electronic components are scanned by the control device to identify the unique IDs without the requirement of electronic components to transmit their IDs in parallel which may cause unnecessary data transmission and communication conflicts. For example, each electronic component may comprise a unique ID which also comprises an ID portion in common with other electronic components of the same type. For example, each ID may comprise the same structure comprising the common ID portion and an unique ID portion, such as 123-01, 123-02, ..., 123-xy, wherein 123 represents the common ID portion and 01, ..., xy represent the unique ID portion. Accordingly, the control device may scan the electronic components for the common ID and then requests the unique ID portion or the unique ID as a whole from each electronic component with the common ID portion one after the other. By such procedure, uncontrolled communication by electronic components transmitting their IDs in parallel to other electronic components may be avoided.

In some embodiments, the control device comprises a memory device or is connectable to an external memory device to store the pairing of the ID of electronic components and the matched function.

Accordingly, once the IDs and functions are matched, the pairings are stored in the respective memory device to be available for the final use of the control module. Alternatively or in addition, the respective memory device may also store the functions and expected reactions associated therewith as basis for matching the IDs and functions.

Alternatively, the control device may be configured to assign a new ID to the electronic components. For example, the memory of the control device or an external memory device comprises parings of functions and IDs to be associated with such functions. The stored IDS associated with the specific functions are then assigned to a respectively identified electronic component as new ID to replace the initial ID. Accordingly, instead of writing into the memory of the control device or into the external memory, the initial IDs are replaced within the electronic components as an initialization step of the control module. For such replacement, the electronic components are configured to be configurable and to comprise a memory to store the new ID. The replacement with new IDs may mitigate the risk of losing data if during flashing of the memory of the control device or into the external memory, for example during an update or reconfiguration, matching data is overwritten.

In some embodiments, the electronic components are sensors, preferably pressure sensors.

For example, the control module is a pressure control module or comprising at least a pressure control functionality according to which several pressure sensors are to be placed within the control module for providing signal representing the pressure of respective pressure lines or sections of such pressure lines. Such pressure sensors are provided as mass-produced goods of the same basic configuration. By each pressure sensor placed within the control module providing a unique ID, the control device of the control module may match the pressure sensors or their unique ID, respectively, in the course of an end-of line test by each of the pressure lines being applied with a respective pressure to match the respective ID with the function or position, respectively, when the respective ID is accompanied by a signal representing the pressure to be detected in such position.

In some embodiments, the data line is or comprises a communication bus, preferably an I²C bus.

The communication bus may allow the electronic components to transmit their respective IDs and operating signals, such as signals representing a pressure in the event of pressure sensors as electronic components, to the control device. However, the communication bus may also allow the control device to control the electronic components. An I²C bus as communication bus provides a simple and efficient implementation of such communication. However, the communication may also be provided by use of an SPI as serial bus system. Furthermore, the communication may comprise a CAN bus, a RS232 bus or a RS485 bus.

In another aspect, the present invention relates to a vehicle comprising a control module as previously described.

A respective vehicle may be a commercial vehicle. Irrespective of the type of vehicle, the control module as previously described allows easy implementation of control functions according to the electronic components placed therein. Further, the control module may allow adapting functionalities in an easy manner as the IDs of the electronic components are not restricted to be associated with a configuration of the control module but may be matched adaptively by being unique.

In some embodiments, the control module is a pressure control module.

As previously described, the pressure control module may comprise several pressure sensors as electronic components to be easily matched with respective pressure lines or sections thereof.

Any features or functionalities relating to the previously described control module with respect to the vehicle are also applicable to the vehicle. In turn, any features or functionalities relating to the vehicle described with respect to the control module are also applicable to the control module.

In another aspect, the present invention relates to a method for producing a control module as previously described, wherein the method comprises the following steps:
- step 1: assigning a unique ID to each of the electronic components associated with at least one control module, wherein the assignment is independent from the configuration of the control module;
- step 2: placing the electronic components within the control module;
- step 3: identifying the unique IDs by the control device; and
- step 4: matching the unique IDs with functions of the respective electronic components according to the configuration of the control module.

With respect to step 1, as previously described, the unique IDs may be assigned to the electronic components before being provided on a reel or another storage medium for being picked and placed within the control module, or such assignment may be carried out at least before placing the electronic components within the control module or even after being placed within the control module.

Further, in step 2, the electronic components are placed within the control module. For example, the electronic components are picked and placed onto a circuit board of the control module. The electronic components may be soldered on the circuit board. Since the unique IDs may be assigned to the electronic components even after being placed within the control module, it is apparent that the numbering of the steps is not necessarily to be associated with a given order of steps. For example, step 2 may be carried out before step 1. However, carrying out the method steps in the numeric order may be advantageous as a straight forward procedure.

According to step 3, the unique IDs of the electronic components placed within the control module may be transmitted to the control device via one or data lines connecting each of the electronic components to the control device or wirelessly. Specifically, the control device may identify the unique IDs of the electronic components by a scan procedure. For example, each electronic component may comprise a unique **ID** which also comprises an **ID** portion in common with other electronic components of the same type. For example, each **ID** may comprise the same structure comprising the common **ID** portion and an unique **ID** portion, such as 123-01, 123-02, ..., 123-xy, wherein 123 represents the common **ID** portion and 01, ..., xy represent the unique **ID** portion. Accordingly, the control device may scan the electronic components for the common **ID** and then requests the unique **ID** portion or the unique **ID** as a whole from each electronic component with the common **ID** portion one after the other. By such procedure, uncontrolled communication by electronic components transmitting their IDs in parallel to other electronic components may be avoided.

In step 4, the control device matches the received IDs with the functions or positions, respectively, the electronic components have to be associated with. As a result of such matching, the control module may be operated in accordance with a predetermined configuration.

In some embodiments, in step 1, the IDs are assigned randomly or in a predetermined value order representing the order of placing the electronic components within the control module.

Accordingly, the IDs may be assigned randomly or representing an order of being picked and placed. However, the assignment is carried out to provide unique IDs for the electronic components to be placed within the control module, i.e. no duplicates of IDs are provided for a respective control module.

In some embodiments, in step 4, the matching is based on an operation of the control module and the set of the unique IDs accompanied by a signal reflecting the operation of the control module.

As previously described, the control module may be operated according to an end-of-line test which at least simulates the functions of the control module. Even though the unique IDs of the electronic components are not dependent on the configuration of the control module, the control device is configured to match the IDs with functions and respective positions of the electronic components based on the signals representing specific responses of the electronic components to the operation of the control module. Alternatively, the control device may be configured to match the IDs and functions in accordance with the order of the electronic components being picked and placed represented by the IDs reflecting such order. The matching of IDs to functions according to an accompanying response signal to an operation of the control device or a pick and place order may be combined to enhance the reliability and/or to provide a plausibility check.

In some embodiments, the control module is a pressure control module and the electronic components are pressure sensors associated with different pressure lines and/or different pressures to be detected, and wherein the operation of the control module comprises applying a pressure to each pressure line serially or applying different pressures to each of the pressure lines in parallel to match the ID of the electronic components accompanied by a signal representing a respective pressure as the signal reflecting the operation of the control module with the respective pressure line.

If the pressure sensors are intended to detect the pressure of different pressure lines, the pressure lines may be pressurized one after the other or in parallel with respect to pressure lines being pressurized with different pressures. If at least some of the pressure sensors may be intended to detect the pressure of different portions of one pressure line, such pressure line may comprise at least for matching procedure a valve or any other pressure influencing means to provide different pressures in the different portions.

Any features or functionalities relating to the previously described control module and/or vehicle with respect to the method are also applicable to the method. In turn, any features or functionalities relating to the method described with respect to the control module and/or vehicle are also applicable to the control module and/or vehicle. In other words, any device feature or functionality also represents a method feature, and vice versa.

In another aspect, the present invention relates to a computer program product comprising instructions which, when the program is executed by a computer, cause the computer to carry out at least step 1 and/or step 4 of the method as previously described.

For example, with respect to step 4, the computer may be the control device or comprised by the control device.

In another aspect, the present invention relates to a computer-readable storage medium comprising instructions which, when the program is executed by a computer, cause the computer to carry out at least step 1 and/or step 4 of the method as previously described.

Further advantages, aspects and details of the invention are subject to the claims, the following description of exemplary embodiments applying the principles of the invention, and the respective exemplary drawings.
**Figure 1** is a schematic illustration of a control module according to an exemplary embodiment of the present invention; and
**Figure 2** is a flow chart of a method for producing a control module according to an exemplary embodiment of the present invention.

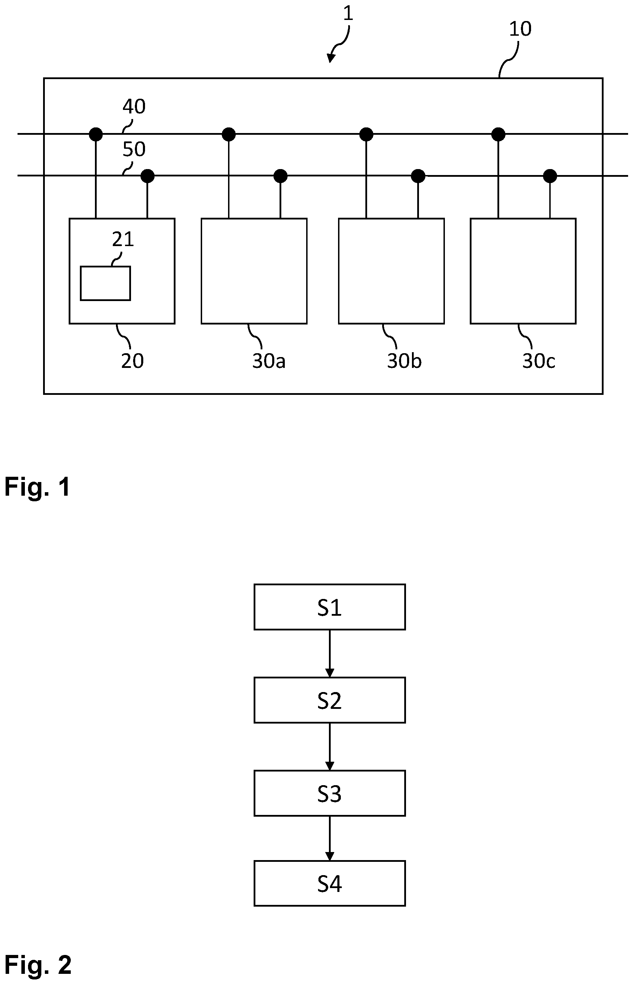

**Figure 1** is a schematic illustration of a control module 1 according to an exemplary embodiment of the present invention. The control module comprises a circuit board 10 as an exemplary support for components to be placed within the control module 10. The control module 10 further comprises a control device 20, here a microcontroller, and three electronic components 30a, 30b, 30c being pressure sensors of the same basic configuration, i.e. each of having the same configuration for detecting a pressure and communicating the detected pressure to the control device 20. The control device 20 and the electronic components 30a, 30b, 30c are soldered onto the circuit board 10. In alternative embodiments, the control module 1 may comprise more or less but at least two electronic components 30a, 30b, 30c of the same basic configuration. In alternative embodiments, the control module 1 may comprise more than one control device 20 with at least one electronic component 30a, 30b, 30c being connected to at least one of the control devices 20.

In the exemplary embodiment, the electronic components 30a, 30b, 30c are connected to the control device 20 via a data line 40 and a clock line 50 constituting parts of an I²C bus. In other embodiments, other communication busses or types of communication, wired or wirelessly, may be used for communication. To allow the control device 10 to distinguish between the communication received by each of electronic modules 30a, 30b, 30c and to control the electronic components 30a, 30b, 30c individually, each of the electronic components 30a, 30b, 30c has a unique ID. The respective assignment of unique IDs will be described further below with reference to Fig. 2. As will be also described with reference to Fig. 2, the control module is configured to match the unique IDs and therefore the individual electronic components 30a, 30b, 30c with the intended functionality or position, respectively, in accordance with the configuration of the control module 1 for the given application, here as a pressure control module to control the pressure of three pressure lines. Each electronic component 30a, 30b, 30c is to be associated with the detection of the pressure within one of the three pressure lines.

The control device 20 comprises a memory device 21 to store the pairings of IDs and functionalities as a result of the matching. The memory device 21 in the exemplary embodiment also stores information on an expected behaviour of electronic components to be associated with respective functions to ease the matching of the IDs and respective electronic components 30a, 30b, 30c with such functions. In other embodiments, the memory device 21 may be provided es an external memory device to be connected to control device 20.

**Figure 2** is a flow chart of a method for producing a control module according to an exemplary embodiment of the present invention.

In step S1, the unique IDs are assigned to each of the electronic components 30a, 30b, 30c independent of the application-specific configuration of the control module. In the exemplary embodiment, the electronic components 30a, 30b, 30c are provided on reel with each of the electronic components 30a, 30b, 30c on the reel is preprogrammed to provide a unique ID assigned randomly. However, in other embodiments, the reel or another storage medium may comprise electronic components with unique IDs in a pick and place order with respect to a predetermined number of electronic components and a respective assignment is repeated for the subsequent number of electronic components, and so on. The predetermined number may correspond to the number of electronic components 30a, 30b, 30c to be placed within one control module or may correspond to a higher number considering a failure rate or the like to ensure the assignment of unique IDs for electronic components 30a, 30b, 30c to be placed within one control module 1.

In step S2, the electronic components 30a, 30b, 30c are placed within the control module 1. In the exemplary embodiment, the electronic components 30a, 30b, 30c are picked, placed and soldered onto the circuit board 10 according to a predetermined pick and place procedure defining the order and position for placing the electronic components. In other embodiments, the electronic components 30a, 30b, 30c may be placed onto the circuit board 10 simultaneously at different positions or not following a predetermined pick and place procedure.

In step S3, the electronic components 30a, 30b, 30c are identified by their respective IDs by the control device 20, here via the data line 40. Accordingly, in step S4, the received unique IDs are matched with functions of the respective electronic components 30a, 30b, 30c according to the configuration of the control module.

In the exemplary embodiment, step S3 and step S4 are carried out during an end-of-line test. With reference to the embodiment of Fig. 1, the electronic components 30a, 30b, 30c are pressure sensors each of which being placed within the control module 1 to detect the pressure within one of the three pressure line to be associated therewith. Accordingly, during the end-of-line text, the first pressure line is pressurized and the control device 20 receives information from each of the electronic components 30a, 30b, 30c comprising the unique ID and a signal reflecting a detected pressure. Since the control device 20 is aware of the first pressure line being pressurized, e.g. by controlling such pressurization, the control device 20 matches the unique **ID** accompanied by a respective pressure signal as the **ID** to be associated with the first pressure line. Matching of the other IDs is carried out by the same principle, i.e. pressurizing the other pressure lines and matching IDs accompanied by respective pressure signals.

Although specific embodiments of the present invention are described in detail herein, they are presented for purposes of explanation only and should not be considered as limiting the scope of the present invention. For example, even though the above embodiments may be described with respect to matching randomly assigned unique IDs with respective functions or positions, respectively, in accordance with carrying out an end-of-line test, the unique IDs may also be assigned depending on a pick and place order of the electronic components. In such event, the matching may be alternatively or additionally based on considering the pick and place order reflected by the unique IDs.

### LIST OF REFERENCE SIGNS

- 1: control module
- 10: circuit board
- 20: control device
- 21: memory device
- 30a: electronic component
- 30b: electronic component
- 30c: electronic component
- 40: data line
- 50: clock line

## Claims

1. Control module (1), comprising:
a control device (20), and
at least two electronic components (30a, 30b, 30c) of the same basic configuration each of which being connected to the control device (20) by a data line (40) for at least transmitting data to the control device, wherein
each of the electronic components (30a, 30b, 30c) has an ID which is unique and independent of the configuration of the control module (1) for a given application.

2. Control module (1) according to claim 1, wherein the ID is a random ID.

3. Control module (1) according to claim 1, wherein the IDs of the electronic components (30a, 30b, 30c) represent an order of the electronic components (30a, 30b, 30c) being placed within the control module (1).

4. Control module (1) according to any one of the preceding claims, wherein the control device (20) is configured to receive IDs of the electronic components (30a, 30b, 30c) to match the IDs with functions of the respective electronic components (30a, 30b, 30c) according to the configuration of the control module (1).

5. Control module (1) according to claim 4, wherein the control device (10) comprises a memory device (21) or is connectable to an external memory device to store the pairing of the ID of electronic components (30a, 30b, 30c) and the matched function.

6. Control module (1) according to any one of the preceding claims, wherein the electronic components (30a, 30b, 30c) are sensors, preferably pressure sensors.

7. Control module (1) according to any one of the proceedings claims, wherein the data line (40) is or comprises a communication bus, preferably an I²C bus.

8. Vehicle comprising a control module (1) according to any one of the preceding claims.

9. Vehicle according to claim 8, wherein the control module (1) is a pressure control module.

10. Method for producing a control module (1) according to any one of the claims 1 to 7, wherein the method comprises the following steps:
- step 1 (S1): assigning a unique ID to each of the electronic components (30a, 30b, 30c) associated with at least one control module (1), wherein the assignment is independent from the configuration of the control module (1);
- step 2 (S2): placing the electronic components (30a, 30b, 30c) within the control module (1);
- step 3 (S3): identifying the unique IDs by the control device (10); and
- step 4 (S4): matching the unique IDs with functions of the respective electronic components (30a, 30b, 30c) according to the configuration of the control module (1).

11. Method according to claim 10, wherein, in step 1 (S1), the IDs are assigned randomly or in a predetermined value order representing the order of placing the electronic components (30a, 30b, 30c) within the control module (1).

12. Method according to claim 10 or 11, wherein, in step 4 (S4), the matching is based on an operation of the control module (1) and the set of the unique IDs accompanied by a signal reflecting the operation of the control module (1).

13. Method according to claim 12, wherein the control module (1) is a pressure control module and the electronic components (30a, 30b, 30c) are pressure sensors associated with different pressure lines and/or different pressures to be detected, and wherein the operation of the control module comprises applying a pressure to each pressure line serially or applying different pressures to each of the pressure lines in parallel to match the ID of the electronic components (30a, 30b, 30c) accompanied by a signal representing a respective pressure as the signal reflecting the operation of the control module (1) with the respective pressure line.

14. Computer program product comprising instructions which, when the program is executed by a computer, cause the computer to carry out at least step 1 (S1) and/or step 4 (S4) of the method according to any one of the claims 10 to 13.

15. Computer-readable storage medium comprising instructions which, when the program is executed by a computer, cause the computer to carry out at least step 1 (S1) and/or step 4 (S4) of the method according to any one of the claims 10 to 13.
